Europäisches Patentamt

**(19)** European Patent Office

Office européen des brevets

**(11)** **EP 0 696 167 B1**

**(12)** **EUROPEAN PATENT SPECIFICATION**

**(45)** Date of publication and mention
of the grant of the patent:
**25.02.1998 Bulletin 1998/09**

**(21)** Application number: **94913737.6**

**(22)** Date of filing: **29.04.1994**

**(51)** Int. Cl.⁶: **A01N 3/02**

**(86)** International application number:
**PCT/GB94/00923**

**(87)** International publication number:
**WO 94/24857 (10.11.1994 Gazette 1994/25)**

**(54)** **COMPOSITIONS FOR THE TREATMENT OF HARVESTED PLANT MATERIAL**

ZUSAMMENSETZUNGEN ZUR BEHANDLUNG VON GEERNTETER PFLANZENMATERIAL

COMPOSITIONS DE TRAITEMENT DE PLANTES RECOLTEES

**(84)** Designated Contracting States:
**AT BE CH DE DK ES FR GB GR IE IT LI LU MC NL PT SE**

**(30)** Priority: **01.05.1993 GB 9309095**
**17.08.1993 GB 9317061**

**(43)** Date of publication of application:
**14.02.1996 Bulletin 1996/07**

**(73)** Proprietor:
**BRITISH TECHNOLOGY GROUP LIMITED**
**London SE1 6BU (GB)**

**(72)** Inventors:
• **CARSTAIRS, M Louise**
**Fife RY10 2RU (GB)**
• **JENNINGS, Laurence W I**
**Fife RY10 2LT (GB)**

**(74)** Representative:
**Dolan, Anthony Patrick**
**British Technology Group**
**101 Newington Causeway**
**London SE1 6BU (GB)**

**(56)** References cited:
**DE-A- 1 164 744**         **GB-A- 1 002 867**

• **CHEMICAL PATENTS INDEX, DOCUMENTATION ABSTRACTS JOURNAL Section Ch, Week 9033, Derwent Publications Ltd., London, GB; Class E, AN 250699 & JP,A,2 174 701 (KYOWA HAKKO KOGYO KK) 6 July 1990**
• **CHEMICAL ABSTRACTS, vol. 98, no. 21, 23 May 1983, Columbus, Ohio, US; abstract no. 174772s, G.N.RAO 'Delaying of petal senescence in excised flowers of Dombeya cayeuxii by certain plant growth regulators' page 268 ; & INDIAN J. EXP. BIOL., vol.21, no.1, 1983 pages 47 - 48**
• **PLANT GROWTH REGULATION, vol.11, 1992, NL pages 45 - 51 Y.SAKS ET. AL. 'Effect of gibberellic acid on carnation flower senescence: evidence that the delay of carnation flower senescence by gibberrellic acid depends on the stage of flower development'**
• **PLANT GROWTH REGULATION, vol.11, 1992 pages 59 - 62 W.G.VAN DOORN ET. AL. 'Effect of exogenous hormones on leaf yellowing in cut flowering branches of Alstroemeria pelegrina L.'**
• **REVTA. BRASIL. BOT., vol.2, 1979, BR pages 73 - 76 G.M.FELIPPE 'Promotion of rooting in stem cuttings of Panicum maximum by gibberrellic acid and other growth regulators'**
• **SCIENCE & CULTURE, vol.52, no.4, 1985 pages 137 - 139 S.M.AHMAD 'In vitro regeneration of Bryum gametophore cuttings treated with CCC, GA3 and a morphactin'**

**Description**

The present invention is concerned with the promotion of continued development and increased longevity of harvested plant material.

Plant materials, especially flowers and foliage, are often short-lived once picked or harvested and may wilt rapidly after picking. To some extent, wilting of cut plant materials such as flowers and/or foliage may be prevented by placing the cut plant stems into water. Conventionally, water is added in the container or vase up to a depth of halfway to two-thirds of the way up the stem length (depending on foliage cover).

There continues to be a demand for cut plant material, such as flowers or foliage, for decorative purposes. However, one of the drawbacks of cut plant material is the short life-span of the material after harvesting. Various additives may be mixed into the vase water in order to delay the death of the plant material. These additives range from the simple inclusion of a teaspoon of domestic sugar (sucrose) to pre-prepared sachets of plant food. However, the commercially available plant food (such as "Chrysal") for cut plant material only slows down the rate of deterioration in the plant material. The plant material will not, however, continue to grow and/or develop and therefore immature buds frequently fail to open at all, even where the plant food is added to the vase water. Moreover, many commercially available plant foods, such as "Chrysal", cannot be used in crystal glass containers and must be made up in warm water to ensure dissolution of the plant food.

Gibberellins are plant hormones which are known to have certain effects on plant development. Horticultural applications of the gibberellins include promotion of the growth of large, seedless grapes, the promotion of the germination of sunflower seeds and the prevention of ripening in citrus fruits. The use of Gibberellins in extending the life of cut flowers and delaying the onset of senescence is disclosed in DE 1164744; JP 217401; Indian Journal of Experimental Biology, Vol. 21(1), 1983, 47 - 48; Plant Growth Regulation, Vol. 11, 1992, 45 - 51; Plant Growth Regulation, Vol. 11, 1992, 59 - 62 and Science and Culture, Vol. 52(4), 1985, 137 - 139. It has also been used for the promotion of rooting in stem cuttings Retva Brasil. Bot., Vol. 2, 1979, 73 - 76.

There is a need for further compositions containing a gibberellin for extending the life of plant material and promoting the continued development thereof. The present inventors have produced a composition which contains a gibberellin and addresses that need.

The present invention thus provides a composition to promote the continued development of harvested plant material, said composition comprising a gibberellin and a flower colour stabiliser.

A preferred gibberellin is gibberellic acid and a particularly preferred form of gibberellic acid is the isomer known as $GA_3$. Other isomeric forms of gibberellic acid may, however, also be used in the composition according to the invention. Optionally the composition may contain a mixture of two or more different isomers of gibberellic acid. It is preferred that the gibberellin comprises 0.005 to 0.30% by weight of the undiluted composition. When diluted with water, the gibberellin is preferably present at a concentration of 1 to 30 ppm, more preferably 1 to 10 ppm and especially 5 to 10 ppm, of the diluted composition.

A colour stabiliser, such as caffeine, is included in the composition according to the present invention to prevent any changes in flower colour, especially fading of colours. Caffeine is preferably present in an amount from 0.15 to 0.20% of the undiluted composition and 15 to 20 ppm in the diluted composition.

The term "continued development" refers to the fact that the harvested plant material treated according to the present invention has enhanced post-harvest flowering or growth compared to non-treated or conventionally treated plant material. Where the harvested plant material is already in full flower or is otherwise not in a state of growth, the present invention is able to maintain the treated plant material in the same state as at the time of harvest for a longer period than would be possible with conventional treatments. Thus, the effects of the present composition include increased florescence (greater degree of flowering), increased growth, a decreased rate of post-harvest deterioration and decay and increased longevity of the harvested plant material.

In the particular case where plant material is harvested with very immature buds, such buds frequently fail to mature into opened flowers following harvest. However, where the plant material is treated in accordance with the present invention, the maturation and successful opening of such buds is greatly promoted. This effect is especially noticeable in long stemmed multi-bud flowers such as freesias where the uppermost (and youngest) buds can achieve a much greater degree of opening than with the untreated stems.

The composition according to the invention also has the advantages that it can be used in crystal glass vases without any detrimental effect and it can be made up in water at any temperature, even cold water.

Gibberellic acid, which is a specific member of the gibberellin group of plant hormones, is destroyed by chlorine. Thus, any gibberellic acid added to tap water will be totally destroyed within hours since tap water contains chlorine which is added to control bacterial growth.

Where the composition according to the invention is to be used in ordinary tap water, for example in domestic use, it is essential that a "chlorine sweep" is included in the composition. However, if the composition is to be added to distilled water or to other non-chlorinated water (for example well water or spring water) then the chlorine sweep is not an absolute requirement.

The term "chlorine sweep" is used herein to refer to any agent which has the ability to remove free molecular chlorine, so reducing the gibberellic acid-destroying effect. Suitable "chlorine sweeps" include sodium metabisulphite and sodium sulphite. The "chlorine sweep" is added in quantities necessary to remove any free molecular chlorine from the water to be used to make up the composition according to the invention. Suitable amounts have been found to be from 1.5 to 3.5% of the undiluted composition and from 5 to 500 ppm of the diluted composition.

In another aspect, the present invention thus provides a composition to promote the continued development of harvested plant material which is in contact with tap water, said composition comprising gibberellic acid, a flower colour stabiliser and a chlorine sweep. Preferably the composition according to the present invention comprises the gibberellic acid GA$_3$ and sodium metabisulphite as a chlorine sweep.

The term "harvested plant material" is used above and hereinafter to refer to any plant part detached from the plant as a whole. In particular, this phrase covers flowers, flower heads, flower-bearing stems, stems, leaves, leafy stems and stems bearing leaves, roots, tendrils, seeds, fruits and/or any other portion of a plant.

Optionally, the composition of the present invention may further comprise an osmotic pressure regulator. Such osmotic pressure regulators are intended to make the composition according to the invention, when diluted, isotonic with the cell sap of the plant material to be treated. Suitable osmotic pressure regulators include low molecular weight saccharides. For instance, a simple sugar, for example a mono or disaccharide (such as glucose or sucrose), is suitable for this purpose and is convenient for reasons of cost. Other examples include fructose, trioses such as maltotriose, glucose hydrates such as mannitol and sorbitol, and polyols such as pentaerythritol, or derivatives or mixtures thereof. The osmotic pressure regulator may comprise from 75 to 98% of the undiluted composition. Suitable concentrations in the diluted composition are 2 to 20 g/litre (2000 to 20000 ppm).

A pH regulator, such as an acid, preferably an organic acid, may also be included. Advantageously, the pH of the composition should be in the range of from 3.5 to 7, preferably from 3.5 to 5.5, to mimic the pH of plant sap. A low pH of this type will also restrict bacterial growth. Examples of suitable organic acids include citric, acetic, tartaric, propionic and lactic acids. Other organic acids are, of course, well-known to those skilled in the art. Alternatively, a compound which generates an acid "in situ" may be used or a very small quantity of a mineral acid When an organic acid is used, suitable amounts are from 0.05 to 5.00% by weight of the undiluted composition depending on the dissociation constant of the chosen acid or mixture of acids.

Additionally, buffers such as sodium acetate, calcium lactate, potassium sodium tartrate and potassium hydrogen phosphate may be included in the composition to help maintain pH at a suitable level.

However, in hard water areas where the level of calcium in the water is already high, it is preferred that the buffer is not a calcium salt, such as calcium lactate. In such circumstances, potassium sodium tartrate is a preferred buffer.

Other additives include calcium ions, vitamin substrates (such as mannitol and myo-inositol), nitrate or ammoniacal nitrogen, potassium ions, phosphates, amino acids (such as glycine), camphor and biocides, such as fungicides (such as carbendazim), antibiotics and bactericides (such as sodium chlorocyanurate, para-nitrophenol, sodium thioglycollate, benzoic acid, salicylic acid, oxine and anthraquinone).

It may be desirable to further include an agent which absorbs or otherwise removes ethylene gas. Ethylene is produced by plants and acts as an ageing (or ripening) agent. One suitable ethylene removing agent is camphor.

It is especially desirable that heavy metals, that is, metals heavier than aluminium, are not present in the composition of the present invention. In this regard chelating agents, such as EDTA (ethylenediaminetetraacetic acid) or DTPA (diethylenetriaminepenta- acetic acid) or the sodium, potassium or calcium salts thereof, may be added to remove any contaminating heavy metals which may be present in the water making up the composition. Preferably, the chelating agent is present in an amount up to 0.2 g/litre (200 ppm). A flocculant such as aluminium sulphate, may also be added to keep the vase water clear and transparent.

Although it is generally desirable to avoid the presence of heavy metals, as defined above, some elements are necessary for plant function and growth when connected to a root system and may still have beneficial effects even with cut flowers. Such elements are known as trace elements since they are generally present in trace amounts. It is envisaged that the following trace elements could be added as their salts to give the following concentrations in the diluted composition according to the invention:-

| | |
|---|---|
| Boron | 0.003 ppm |
| Copper | 0.003 ppm |
| Iron | 0.030 ppm |
| Magnesium | 0.020 ppm |
| Manganese | 0.003 ppm |
| Molybdenum | 0.003 ppm. |

In some areas, fluoride is added to water in the form of sodium fluoride at a level of about 1 ppm. Fluoride ions are known to damage cut flowers by causing brown discolourations. Two major effects of fluoride ions are known. First, fluoride ions can cause a massive exodus of calcium ions from the cells of a plant thereby producing an upset in the osmotic balance in the cells. Secondly, fluoride ions react irreversibly with adenosine triphosphate the reactions of which are the base for all cellular syntheses. Accordingly, it is clearly desirable to remove fluoride ions from water that is to be used with the composition of the invention. It is therefore envisaged that the composition of the present invention may further comprise a fluoride ion scavenger. Suitable fluoride ion scavengers include calcium gluconate, ion exchange resins, adenosine triphosphate and alizarin dyes, such as alizarin-S, which are specific for fluoride ions. The use of calcium gluconate is especially preferred since this may also serve as a buffer.

In the case of daffodils and narcissi, it is current practice not to mix these flowers with other cut flowers because the cut daffodil/narcissus stem exudes a substance which is, in effect, toxic to other cut flowers. This substance is a mucilaginous slime which adversely affects other flowers by, inter alia, blocking the vascular system by which liquids are conveyed within the xylem. However, the mucilaginous exudate is a mixture of polysaccharides such as hemi-celluloses, pectins and gums and can therefore be digested by certain enzyme preparations. According to a further embodiment of the invention, the composition may therefore further comprise an enzyme preparation. Suitable enzyme preparations include those of plant origin commonly used to degrade polysaccharides in industrial applications. Mixtures of enzymes capable of breaking the $\alpha$-(1→4), $\alpha$-(1→6), $\beta$-(1→4), $\beta$-(1→3) linkages in such polysaccharides may be used with amylases and gluconases being particularly useful in this regard. Preferably, such enzymes are present in quantities of a few ppm in the diluted composition. A beneficial side-effect of the inclusion of such enzymes is that the polysaccharides are degraded to glucose and fructose which the cut flowers may then use as food or an osmotic pressure regulator.

The composition according to the invention may be in any convenient form, such as for example a powder, tablet, granules, solution or suspension. Generally powder or tablet forms of the composition are most convenient to transport or store until required. The powder or tablet may then be simply added to a predetermined volume of water and mixed in with stirring prior to use. Alternatively, the composition may be formulated into a liquid concentrate which can be diluted before use. The dilute and ready-to-use version of the composition also falls within the scope of the present invention. It is preferred that the dilute, ready-to-use composition contains 2-25 g/litre, preferably 5-20 g/litre, of the concentrated composition. Thus, the total concentration of the composition components in water is 2000 to 25000 ppm, preferably 5000 to 20000 ppm.

The water added to, or forming part of the present invention is at a temperature of less than 50°C, for example 40°C. Desirably the water is at a temperature of from 2°C to 32°C, such as 8°C to 26°C.

The harvested plant material is placed into a dilute aqueous form of the composition. The plant material is allowed to stand in the composition throughout its harvested life. From time to time the volume of the composition may be topped up, as required.

The composition can be used for any type of cut (harvested) plant material, especially commercial and garden flowers, shrubs, foliage, etc. The composition is particularly useful for cut flowers and shrubs, especially roses, irises, carnations, lilies, daffodils, sweet peas, freesias, poppies, orchids, chrysanthemums, lilac and eucalyptus, and Christmas trees. It is especially suitable for soil-stemmed flower varieties, such as anemones, phlox, sweet williams, etc., which normally have a notoriously short vase life.

The composition of the invention may also be used on plant material that has been previously treated with the composition for sustaining plant material described in applicant's co-pending patent application WO 94/24856.

Viewed from another aspect, the present invention also covers the use of a gibberellin, preferably gibberellic acid, or a composition comprising a gibberellin as defined above, and a flower colour stabiliser to promote the continued development of harvested plant material, especially where the plant material is watered with tap water or other forms of chlorinated water.

Viewed from a further aspect, the present invention provides a method of sustaining harvested plant material, said method comprising treating said plant material with a composition comprising a gibberellin, preferably gibberellic acid, and a flower colour stabiliser as defined above. In a development of this aspect of the present invention, there is provided a method of sustaining harvested plant material in contact with chlorinated water such as tap water, said method comprising treating said plant material with a composition comprising gibberellic acid, a flower colour stabiliser and a chlorine sweep.

Viewed from yet a further aspect, the present invention provides a method of promoting the post-harvest development of plant material, said method comprising treating said plant materials after harvest with a composition comprising a gibberellin, preferably gibberellic acid, and a flower colour stabiliser as defined above. Again, where the said plant material is in contact with tap water or other chlorinated water, the composition comprises gibberellic acid, a flower colour stabiliser and a chlorine sweep.

In a further aspect, the present invention provides harvested plant material treated with a composition, as described above.

The invention is illustrated further by reference to the following, non-limiting, examples.

Example 1

|  | | % by weight |
|---|---|---|
| Sulphonated Polyester (Sulphonated Pentaerythritol) | 60 g | 82.94 |
| $KNO_3$ | 1.29 g | 1.78 |
| $(NH_4)_2 HPO_4$ | 1.07 g | 1.48 |
| Gibberellic Acid (or $GA_3$) | 0.2 g | 0.28 |
| Citric Acid | 1.6 g | 2.21 |
| Tartaric Acid | 1.0 g | 1.38 |
| Mannitol | 3.0 g | 4.15 |
| Myo-inositol | 1.0 g | 1.38 |
| Glycine | 0.1 g | 0.14 |
| Sodium metabisulphite | 2.0 g | 2.76 |
| Calcium Gluconate | 1.08 g | 1.49 |
|  | 72.34 g | |

The ingredients were admixed together and diluted before use to a concentration of 7 g/litre (i.e. 7 g of total composition listed above per litre of water).

Example 2

|  | | % by weight |
|---|---|---|
| Glucose | 100 g | 87.57 |
| $KNO_3$ | 1.29 g | 1.13 |
| $(NH_4)_2 HPO_4$ | 1.07 g | 0.94 |
| Gibberellic Acid (or $GA_3$) | 0.2 g | 0.18 |
| Citric Acid | 2.0 g | 1.75 |
| Tartaric Acid | 1.1 g | 0.96 |
| Mannitol | 3.0 g | 2.63 |
| Myo-inositol | 1.0 g | 0.88 |
| Glycine | 0.1 g | 0.09 |
| Sodium metabisulphite | 2.0 g | 1.75 |
| Camphor | 0.5 g | 0.44 |
| Calcium Lactate | 1.84 g | 1.61 |
| Carbendazim | 0.1 g | 0.09 |
|  | 114.2 g | |

The ingredients were admixed together and diluted before use with water to a concentration of 11 g/litre.

Example 3

|  |  | % by weight |
|---|---|---|
| Sorbitol | 50 g | 78.42 |
| $KNO_3$ | 1.29 g | 2.02 |
| $(NH_4)_2 HPO_4$ | 1.07 g | 1.68 |
| Gibberellic Acid (or $GA_3$) | 0.10 g | 0.16 |
| Citric Acid | 2.0 g | 3.14 |
| Tartaric Acid | 1.1 g | 1.73 |
| Mannitol | 3.0 g | 4.71 |
| Myo-inositol | 1.0 g | 1.57 |
| Glycine | 0.1 g | 0.16 |
| Sodium metabisulphite | 2.0 g | 3.14 |
| Camphor | 1.0 g | 1.57 |
| Calcium Lactate | 1.0 g | 1.57 |
| Carbendazim | 0.1 g | 0.16 |
|  | 63.76 g |  |

The ingredients were admixed together and diluted before use with water to a concentration of 6 g/litre.

Example 4

Twelve stems of Lunaria annua were carefully harvested just before flowering, and cut to the same length. The stems were divided into four lots and placed in flasks, each flask charged with 500 ml of one of the working solutions A, B, C or D.

Solution A (Control 1) contained only water and 0.02 g/litre of a biocide (sodium chlorocyanurate) to discourage bacterial growth.
Solution B (Control 2) contained:

| $KNO_3$ | 0.129 g/litre |
|---|---|
| $(NH_4)_2 HPO_4$ | 0.107 g/litre |
| Citric Acid | 0.005 g/litre |

Solution C (Control 3) contained a commercial plant food (Chrysal) made up according to the instructions supplied.
Solution D (Test Solution) contained:

| Sucrose | 6 g/litre |
|---|---|
| $KNO_3$ | 0.129 g/litre |
| $(NH_4)_2 HPO_4$ | 0.107 g/litre |
| Citric Acid | 0.005 g/litre |
| $GA_3$ | 0.010 g/litre |
| Biocide (Undecanoic acid) | 0.02 g/litre |

Citric or Tartaric acid was added to give a pH reading of 5.0 to 5.5 for the overall solution with a pH meter.

The flowering stems were examined daily and the final outcome noted.

RESULTS

In Control 1 (Solution A), the plants failed in five days. With Control 2 (Solution B), the plants remained green but showed some petal drop. In Control 3 (Solution C), the food did better than Control 2 but much less well than the test solution (Solution D) where the plants showed a 15% extension in terms of stem length, had more open florets and less petal fall.

The results after 14 days are given in Table 1.

TABLE 1

| A CONTROL 1 | B CONTROL 2 | C CONTROL 3 | D TEST SOLUTION |
|---|---|---|---|
| Complete death of the stems. | Plants still green, some flowers remain (large petal fall). | Plants in reasonable condition, but some petal fall noticeable. | Plants 5 cm taller than originally cut. Good flowers, little petal fall. |

Example 5

Forty-five stems of Iridaceae (Iris) in tight bud were split into three equal groups. Each group was placed in a flask charged with one litre of working solution and the flasks were maintained separately. One group (Group A) was placed in just water, one group (Group B) was placed in the test solution and, lastly, one group (Group C) was held in conditions believed to reflect current best practice (namely, the flowers were placed in water at 5 degrees centigrade containing "Chrysal"). The flowers were examined daily. The test was conducted in the absence of light for the first seven days. On day eight, the surviving flowers were transferred to a dimly lit room.

The test solution contained (per litre of water):

| | |
|---|---|
| Glucose | 10 g |
| Gibberellic Acid | 0.005 g |
| Citric Acid | 0.10 g |
| Mannitol | 0.3 g |
| Myo-inositol | 0.1 g |
| Glycine | 0.01 g |
| Sodium metabisulphite | 0.2 g |
| Sodium Methyl Salicylate | 0.2 g |
| Camphor | 0.025 g |
| Calcium gluconate | 0.030 g |
| $KNO_3$ | 0.129 g |
| $(NH_4)_2HPO_4$ | 0.107 g |
| Citric acid | 0.005 g |

The results are shown in Table 2 below. In this table, the expression "to damp off" means "to rot" and, accordingly, the expression "damped off" means "rotting".

TABLE 2

| DAY | NUMBER OF OPEN BLOOMS | | |
|---|---|---|---|
| | 5°C WATER + "CHRYSAL" BEST CURRENT PRACTICE (Group C) | 13°C TEST SOLUTION (Group B) | 13°C WATER (Group A) |
| 1 | 0 | 0 | 0 |
| 2 | 0 | 0 | 0 |
| 3 | 0 | 2 | Showing damage (starting to damp off) |
| 4 | All open | All open | All damped off |
| 5 | All open | All open | - |
| 6 | All open | All open | - |
| 7 | Blooms curled at petal edges | All open | - |
| 8 | All damped off | All open | - |
| 9 | All damped off | Senescing | - |
| 10 | - | Senescing | - |

Example 6

| | | % by weight |
|---|---|---|
| Sucrose | 1000 g | 91.66 |
| Gibberellic Acid (GA$_3$) | 2 g | 0.18 |
| Citric Acid | 24 g | 2.20 |
| Tartaric Acid | 10 g | 0.92 |
| Glycine | 1 g | 0.09 |
| Sodium metabisulphite | 20 g | 1.83 |
| Camphor | 5 g | 0.46 |
| Calcium lactate | 10 g | 0.92 |
| KNO$_3$ | 19 g | 1.74 |
| | 1091 g | |

A test solution was prepared by admixing together the above ingredients and diluting a portion of the total composition with water to a concentration of 11 g/litre.

Two fresh cut Christmas trees were placed in the test solution and one was removed after 18 days. After 4 months, the tree allowed to remain in the test solution was still green with little needle drop whereas the tree removed from the test solution had turned brown and dropped all its needles.

Example 7

Fifteen stems of yellow carnations were divided into three equal groups and each group was placed in a flask charged with 1 litre of working solution. One group (Group A) was placed in test solution A which did not contain caffeine, one group (Group B) was placed in test solution B which contained caffeine and one group (Control Group) was placed in water. The composition of the test solutions was as follows:-

8

Test Solution A

|  |  | % by weight |
|---|---|---|
| Glucose | 100.00 g | 87.49 |
| $KNO_3$ | 1.29 g | 1.13 |
| $(NH_4)_2 HPO_4$ | 1.07 g | 0.94 |
| Gibberellic Acid (or $GA_3$) | 0.20 g | 0.17 |
| Citric Acid | 2.00 g | 1.75 |
| Tartaric Acid | 1.10 g | 0.96 |
| Mannitol | 3.00 g | 2.62 |
| Myo-inositol | 1.00 g | 0.87 |
| Glycine | 0.10 g | 0.09 |
| Sodium metabisulphite | 2.10 g | 1.84 |
| Camphor | 0.50 g | 0.44 |
| Calcium Lactate | 1.84 g | 1.61 |
| Carbendazim | 0.10 g | 0.09 |
|  | 114.30 g |  |

The ingredients were admixed together and diluted before use with water to a concentration of 11 g/litre.

Test Solution B

|  |  | % by weight |
|---|---|---|
| Glucose | 100.00 g | 86.42 |
| $KNO_3$ | 1.29 g | 1.11 |
| $(NH_4)_2 HPO_4$ | 1.07 g | 0.92 |
| Gibberellic Acid (or $GA_3$) | 0.20 g | 0.17 |
| Citric Acid | 1.90 g | 1.64 |
| Tartaric Acid | 1.00 g | 0.86 |
| Mannitol | 3.00 g | 2.59 |
| Myo-inositol | 1.00 g | 0.86 |
| Glycine | 0.10 g | 0.09 |
| Sodium metabisulphite | 2.00 g | 1.73 |
| Camphor | 0.70 g | 0.60 |
| Calcium Lactate | 1.00 g | 0.86 |
| Carbendazim | 0.20 g | 0.17 |
| Nystatin | 0.05 g | 0.04 |
| Caffeine | 0.20 g | 0.17 |
| Oxine (8-hydroxyquinoline) | 2.00 g | 1.73 |
|  | 115.71 g |  |

The ingredients were admixed together and diluted before use with water to a concentration of 11 g/litre.

After one week, the stems in test solution B were clearly deeper in colour than the stems in test solution A or water, especially when examined in daylight. This clearly shows the effectiveness of caffeine as a colour stabiliser.

**Claims**

1. A composition for promoting the continued development of plant material, said composition comprising a gibberellin and a flower colour stabiliser.

2. A composition according to claim 1 in which the gibberellin is gibberellic acid.

3. A composition according to either claim 1 or 2 in which the colour stabiliser is caffeine.

4. A composition according to any one of claims 1 to 3 which further comprises an osmotic pressure regulator.

5. A composition according to any one of the preceding claims which further comprises a pH regulator.

6. A composition according to any one of the preceding claims which further comprises a chlorine sweep.

7. A composition according to any one of the preceding claims which further comprises a biocide.

8. A composition according to any one of the preceding claims which further comprises an agent which removes ethylene gas.

9. A composition according to any one of the preceding claims which further comprises a chelating agent.

10. A composition according to any one of the preceding claims which further comprises a vitamin substrate.

11. A composition according to any one of the preceding claims which further comprises an amino acid.

12. A composition according to any one of the preceding claims which further comprises a fluoride ion scavenger.

13. A composition according to any one of the preceding claims which further comprises a source of nitrate or ammoniacal nitrogen.

14. A composition according to any one of the preceding claims in dilute ready-to-use form.

15. A composition according to any one of claims 1 to 13 in the form of a powder or tablet.

16. A composition according to any one of claims 1 to 13 in the form of a liquid concentrate.

17. A method of sustaining harvested plant material, said method comprising treating plant material with a composition as defined in any one of claims 1 to 16.

18. Use of a composition as defined in any one of claims 1 to 16 to promote the continued development of harvested plant material.

19. Harvested plant material treated with a composition as defined in any one of claims 1 to 16.

**Patentansprüche**

1. Zusammensetzung zur Förderung der anhaltenden Entwicklung von Pflanzenmaterial, wobei die Zusammensetzung ein Gibberellin und einen Pflanzenfarbstabilisator umfaßt.

2. Zusammensetzung nach Anspruch 1, wobei das Gibberellin Gibberellinsäure ist.

3. Zusammensetzung nach Anspruch 1 oder 2, wobei der Farbstabilisator Coffein ist.

**4.** Zusammensetzung nach einem der Ansprüche 1 bis 3, umfassend zusätzlich einen Regulator für den osmotischen Druck.

**5.** Zusammensetzung nach einem der vorangehenden Ansprüche, umfassend ferner einen pH-Regulator.

**6.** Zusammensetzung nach einem der vorangehenden Ansprüche, umfassend ferner ein Mittel zur Entfernung von Chlor.

**7.** Zusammensetzung nach einem der vorangehenden Ansprüche, umfassend ferner ein Biozid.

**8.** Zusammensetzung nach einem der vorangehenden Ansprüche, umfassend ferner ein Mittel, das Ethylengas entfernt.

**9.** Zusammensetzung nach einem der vorangehenden Ansprüche, umfassend ferner einen Chelatbildner.

**10.** Zusammensetzung nach einem der vorangehenden Ansprüche, umfassend ferner ein Vitaminsubstrat.

**11.** Zusammensetzung nach einem der vorangehenden Ansprüche, umfassend ferner eine Aminosäure.

**12.** Zusammensetzung nach einem der vorangehenden Ansprüche, umfassend ferner ein Abfangmittel für Fluoridionen.

**13.** Zusammensetzung nach einem der vorangehenden Ansprüche, umfassend ferner eine Quelle für Nitrat- oder Ammoniakstickstoff.

**14.** Zusammensetzung nach einem der vorangehenden Ansprüche in verdünnter gebrauchsfertiger Form.

**15.** Zusammensetzung nach einem der Ansprüche 1 bis 13 in Form eines Pulvers oder einer Tablette.

**16.** Zusammensetzung nach einem der Ansprüche 1 bis 13 in Form eines flüssigen Konzentrats.

**17.** Verfahren zur Aufrechterhaltung von geerntetem Pflanzenmaterial, wobei das Verfahren die Behandlung des Pflanzenmaterials mit einer Zusammensetzung nach einem der Ansprüche 1 bis 16 umfaßt.

**18.** Verwendung einer Zusammensetzung nach einem der Ansprüche 1 bis 16 zur Förderung der anhaltenden Entwicklung von geerntetem Pflanzenmaterial.

**19.** Geerntetes Pflanzenmaterial, das mit einer Zusammensetzung nach einem der Ansprüche 1 bis 16 behandelt worden ist.

**Revendications**

**1.** Composition pour promouvoir le développement continu de plantes, ladite composition comprenant une gibbérélline et un stabiliseur de couleur floral.

**2.** Composition sur la revendication 1 dans laquelle la gibbérélline est l'acide gibbérélique.

**3.** Composition selon la revendication 1 ou 2 dans laquelle le stabiliseur de couleur est la caféine.

**4.** Composition selon l'une quelconque des revendications 1 à 3 qui contient en outre un régulateur de pression osmotique.

**5.** Composition selon l'une quelconque des revendications précédentes qui contient en outre un régulateur de pH.

**6.** Composition selon l'une quelconque des revendications précédentes qui contient en outre une substance éliminant le chlore.

**7.** Composition selon l'une quelconque des revendications précédentes qui contient un biocide.

8. Composition selon l'une quelconque des revendications précédentes qui contient en outre un agent éliminant le gaz éthylène.

9. Composition selon l'une quelconque des revendications précédentes qui contient en outre un agent de chélation.

10. Composition selon l'une quelconque des revendications précédentes qui contient en outre un substrat vitaminé.

11. Composition selon l'une quelconque des revendications précédentes qui contient en outre un amino acide.

12. Composition selon l'une quelconque des revendications précédentes qui contient en outre un fixateur d'ions fluorures.

13. Composition selon l'une quelconque des revendications précédentes qui contient en outre une source de nitrate ou d'azote ammoniacal.

14. Composition selon l'une quelconque des revendications précédentes sous forme diluée et prête à l'emploi.

15. Composition selon l'une quelconque des revendications 1 à 13 sous forme d'une poudre ou d'une tablette.

16. Composition selon l'une quelconque des revendications 1 à 13 sous forme d'un concentré liquide.

17. Procédé pour entretenir des plantes récoltées ledit procédé consistant à traiter les plantes avec une composition telle que définie selon l'une quelconque des revendications 1 à 16.

18. Utilisation d'une composition telle que définie selon l'une quelconque des revendications 1 à 16 pour promouvoir le développement continu de plantes récoltées.

19. Plantes récoltées traitées à l'aide d'une composition telle que définie selon l'une quelconque des revendications 1 à 16.